# EUROPÄISCHE PATENTANMELDUNG

(11) **EP 1 310 711 A2**
(43) Veröffentlichungstag der Anmeldung: **14.05.2003**
(21) Anmeldenummer: 02024345.7
(22) Anmeldetag: 02.11.2002
(51) Int. Cl.: F16K 11/078

(54) **Wassermischventil**

(30) Priorität: 12.11.2001 DE 10155137
(71) Anmelder: Friedrich Grohe AG & Co. KG, 58675 Hemer (DE)
(72) Erfinder: Pawelzik, Manfred, 59494 Soest (DE)

(57) **Zusammenfassung**

Bei einem Wassermischventil, bestehend aus einem an Sanitärarmaturen anschließbaren Sondergehäuse (1) oder Kartusche, das aus einer Hülse (2) und einem Wasserdurchtrittsöffnungen ausweisenden Bodenteil (3) gebildet ist, und wenigstens einer, im Wesentlichen unbeweglich gehaltenen Ventilsitzscheibe und einer an der Ventilsitzscheibe angelagerten, mit Hilfe eines Betätigungsorgans (5) bewegbaren Steuerscheibe, wobei an den Wasserdurchtrittsöffnungen gummielastische Dichtungen (45) zur Abdichtung zwischen der Ventilsitzscheibe und einer Sanitärarmatur unlösbar angeordnet sind, ist vorgeschlagen, dass die Dichtungen (45) an einem Dichtungsträger (4) ausgebildet sind, der in einer Öffnung (30) des Bodenteils (3) eingesetzt ist, wobei in der Stecklage der Dichtungsträger (4) zum Bodenteil (3) axial begrenzt verschiebbar gehalten ist.

## Beschreibung

Die Erfindung betrifft ein Wassermischventil, bestehend aus einem an Sanitärarmaturen anschließbaren Sondergehäuse oder Kartusche, das aus einer Hülse und einem Wasserdurchtrittsöffnungen aufweisenden Bodenteil gebildet ist, und wenigstens einer, im Wesentlichen unbeweglich gehaltenen Ventilsitzscheibe und einer an der Ventilsitzscheibe angelagerten, mit Hilfe eines Betätigungsorgans bewegbaren Steuerscheibe, wobei in den Wasserdurchtrittsöffnungen gummielastische Dichtungen zur Abdichtung zwischen der Ventilsitzscheibe und einer Sanitärarmatur unlösbar angeordnet sind.
Ein derartiges Wassermischventil ist aus der Druckschrift DE 37 38 854 A1 bekannt. Bei der hier verwendeten Dichtungsanordnung hat sich in Versuchen herausgestellt, dass es bei den unlösbar am Bodenteil ausgebildeten Dichtungen in extremen Belastungssituationen zu Undichtigkeiten kommen kann. Außerdem wurde festgestellt, dass die Ventilsitzscheibe in Abhängigkeit vom anstehenden Wasserdruck geringe Axialbewegungen im Sondergehäuse ausführt. Diese Axialbewegungen der Ventilsitzscheibe können von fest am Bodenteil angeordneten Dichtungen nur unvollkommen kompensiert werden.

Der Erfindung liegt die Aufgabe zugrunde, das Bodenteil des Wassermischventils zu verbessern, so dass auch bei Extrembelastungen der Ventilsitzscheibe eine Abdichtung im Bodenteil gewährleistet ist.

Diese Aufgabe wird erfindungsgemäß bei einem gattungsgemäßen Wassermischventil dadurch gelöst, dass die Dichtungen an einem Dichtungsträger ausgebildet sind, der in eine Öffnung des Bodenteils eingesetzt ist, wobei in der Stecklage der Dichtungsträger zum Bodenteil axial begrenzt verschiebbar gehalten ist.
Weitere Ausgestaltungen der Erfindung sind in den Ansprüchen 2 bis 10 angegeben.

Mit den erfindungsgemäßen Maßnahmen können einerseits die Vorteile der einstückig im Bodenbereich angeordneten Dichtungen beibehalten werden, während andererseits die Axialbewegung der Ventilsitzscheibe, die, wie in Messungen festgestellt wurde, maximal etwa 0,18 mm beträgt, sicher kompensiert werden.

Ein Ausführungsbeispiel der Erfindung ist in der Zeichnung dargestellt und wird im Folgenden näher beschrieben. Es zeigt in der Zeichnung
- Figur 1: ein in einem Sondergehäuse angeordnetes Wassermischventil in Seitenansicht, teilweise geschnitten;
- Figur 2: das in Figur 1 gezeigte Wassermischventil um 90° gedreht in der Ansicht auf ein Bodenteil;
- Figur 3: einen Teil des Bodenteils in vergrößerter Darstellung im Längsschnitt;
- Figur 4: das in Figur 2 gezeigte Bodenteil ohne Dichtungsträger;
- Figur 5: das Bodenteil gemäß Figur 4 in der Schnittebene V;
- Figur 6: das Bodenteil gemäß Figur 4 um 180° gedreht;
- Figur 7: den in Figur 2 gezeigten Dichtungsträger ohne Bodenteil;
- Figur 8: den Dichtungsträger gemäß Figur 7 in der Schnittebene VIII;
- Figur 9: den in Figur 7 gezeigten Dichtungsträger um 180° gedreht.

Das in der Zeichnung dargestellte Wassermischventil ist in einem Sondergehäuse 1 angeordnet und kann als Baueinheit in eine entsprechend ausgebildete Sanitärarmatur eingefügt werden. Das Sondergehäuse 1 besteht aus einer gestuften Hülse 2 und einem Bodenteil 3, wobei das Bodenteil 3 im Bereich der Stirnseite mit dem großen Durchmesser der Hülse 2 einfügbar und in der Stecklage mit der Hülse 2 verrastbar ist.
In dem Sondergehäuse 1 ist in bekannter Weise eine im Wesentlichen ortsfest gehaltene Ventilsitzscheibe angeordnet, auf der eine mit einem Betätigungsorgan 5 verschiebbare Steuerscheibe angelagert ist. In der Ventilsitzscheibe ist jeweils eine Durchtrittsöffnung für Kalt- und Heißwasser und eine Auslassöffnung für Mischwasser ausgebildet. Mit Hilfe eines in der Steuerscheibe ausgebildeten Überströmkanals können diese Öffnungen in Abhängigkeit von der Stellung der Steuerscheibe mehr oder weniger in Überdeckung gebracht werden und somit die Durchflussmenge und das Mischungsverhältnis von Kalt- und Heißwasser bestimmt werden.

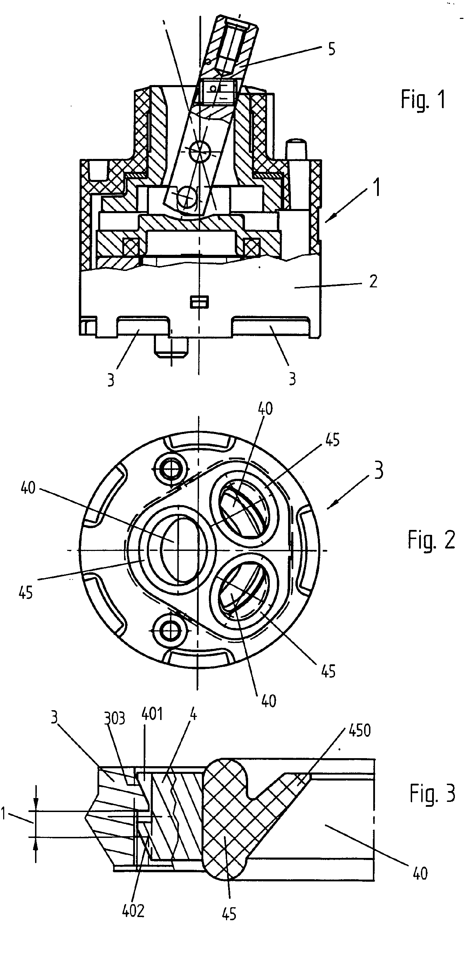

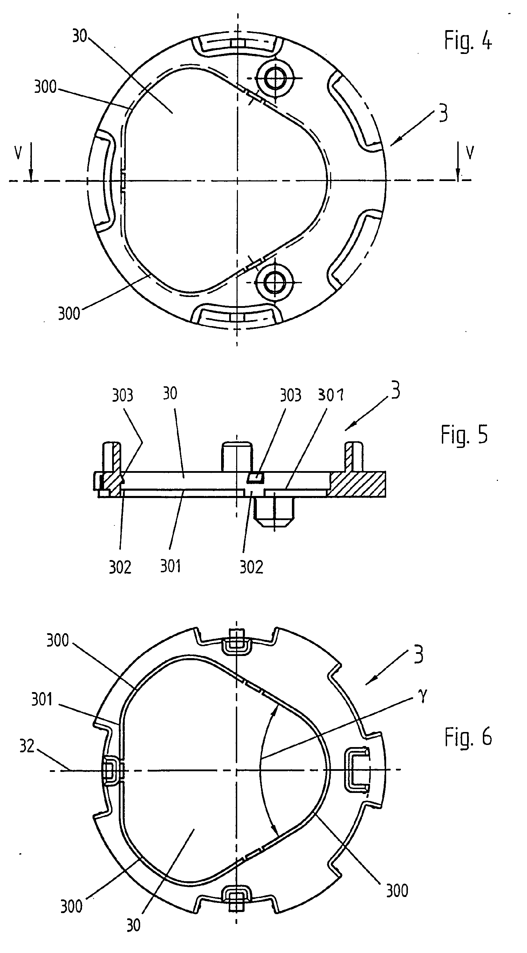

An der Ventilsitzscheibe ist das Bodenteil 3 des Sondergehäuses 1 in der Hülse 2 vorgelagert und mit einer Öffnung 30 versehen, in der ein starrer Dichtungsträger 4 angeordnet ist. In dem Dichtungsträger 4 sind entsprechend den Öffnungen in der Ventilsitzscheibe Durchtrittsöffnungen 40 für das zufließende Kaltwasser, Heißwasser und das abfließende Mischwasser ausgebildet. An der Innenwandung der jeweiligen Durchtrittsöffnung 40 ist eine schlauchförmige gummielastische Dichtung 45 angespritzt. Bei den Dichtungen 45 sind außerdem an den Innenwandungen Wasserführungen 450 angeformt, so dass ein relativ wirbelfreier Übergang an den Öffnungen der Ventilsitzscheibe erfolgen kann. Die Durchtrittsöffnungen 40 in dem Dichtungsträger 4 sind im Querschnitt oval ausgebildet, wobei zwei Durchtrittsöffnungen 40 für den Zufluss von Kalt- und Heißwasser mit geringem Abstand zu einer auf der Höhe eines gleichschenkligen Dreiecks vorgesehenen Symmetrieachse 32 angeordnet sind, während die dritte Durchtrittsöffnung 40 für den Mischwasserabfluss auf der Symmetrieachse 32 angeordnet ist, wie es insbesondere aus Figur 2, 7 und 9 der Zeichnung zu entnehmen ist. Mit den an der Innenwandung der Durchtrittsöffnungen 40 angespritzten schlauchförmigen Dichtungen 45 werden die einzelnen Wasserführungskanäle in der in der Zeichnung nicht dargestellten Sanitärarmatur voneinander getrennt und nach außen abgedichtet mit den entsprechenden Öffnungen in der Ventilsitzscheibe im Sondergehäuse 1 verbunden.
Die Öffnung 30 im Bodenteil 3 weist im Querschnitt die Form eines gleichschenkligen Dreiecks auf, wobei die Ecken 300 des Dreiecks mit Kreisbögen verrundet sind, wie es insbesondere aus Figur 4 der Zeichnung zu entnehmen ist. Der Winkel γ des gleichschenkligen Dreiecks, von dem die Öffnung 30 im Wesentlichen begrenzt ist, beträgt 61° bis 65°, vorzugsweise 62°. Der starre ebene Dichtungsträger 4 weist einen entsprechend der Öffnung 30 dimensionierten Umfang auf, so dass er von der Öffnung 30 axial verschiebbar gehalten werden kann.
Durch den an der Ventilsitzscheibe zur Wirkung gelangenen Wasserdruck wird die Ventilsitzscheibe in abgesperrter Ventilstellung verstärkt gegen die Steuerscheibe gedrückt, so dass hierbei eine axiale Verschiebung von bis zu 0,18 mm auftreten kann. Bei geöffneter Ventilstellung verringert sich der wirksame Druck, so dass in dieser Ventilstellung eine entsprechende axiale Rückverschiebung erfolgt, wie es in Versuchen ermittelt wurde. Der axial verschieblich in der Öffnung 30 des Bodenteils 3 gehaltene Dichtungsträger 4 kann diesen axialen Bewegungen der Ventilsitzscheibe in einem gewissen Umfang folgen, so dass auch in extremen Belastungssituationen mit Hilfe des Dichtungsträgers 4 ein dichter Wasseranschluss des Wassermischventils gewährleistet ist.

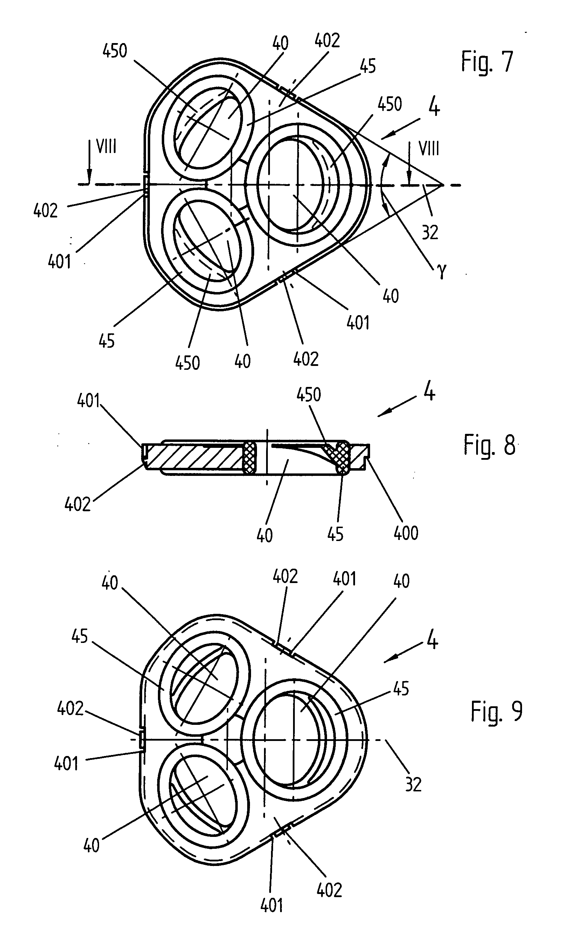

Damit der Dichtungsträger 4 unverlierbar in dem Bodenteil 3 gehalten werden kann, ist in der Seitenwandung der Öffnung 30 eine radial vorstehende Schulter 301 ausgebildet. Zusätzlich ist symmetrisch an den drei geraden Seitenwandungen der Öffnung 30 jeweils ein Axialschlitz 302 in der Schulter 301 ausgebildet, wobei außerdem axial versetzt zur Schulter 301 in jedem Axialschlitz 302 eine radial vorstehende Rastnase 303 angeformt ist, wie es insbesondere aus Figur 5 der Zeichnung zu entnehmen ist. Im Dichtungsträger 4 an der Seitenwandung ist ebenfalls passend zu der Schulter 301 eine Schulter 400 radial vorstehend ausgebildet, wie es insbesondere aus Figur 8 der Zeichnung zu entnehmen ist. In der Schulter 400 sind entsprechend zu den Axialschlitzen 302 Axialschlitze 401 ausgebildet, in denen axial zur Schulter 400 versetzt ebenfalls radial vorspringende Rastnasen 402 angeformt sind. Die Schultern 301, 400 und die Rastnasen 303, 402 sind dabei so angeordnet und dimensioniert, dass der Dichtungsträger 4 in die Öffnung 30 des Bodenteils 3 durch ein elastisches Nachgeben der Rastnasen 303, 402 einsprengbar ist. Nach dem Einsprengvorgang ist der Dichtungsträger 4 unverlierbar in dem Bodenteil 3 gehalten, wobei die Eintauchtiefe des Dichtungsträgers 4 in der Öffnung 30 von den Schultern 301, 400 begrenzt ist, wie es insbesondere aus Figur 3 der Zeichnung zu entnehmen ist. Hierbei ist ein axialer Verschiebungsbereich 31 des Dichtungsträgers 4 relativ zum Bodenteil 3 von wenigstens 0,18 mm gewährleistet.

## Patentansprüche

1. Wassermischventil, bestehend aus einem an Sanitärarmaturen anschließbaren Sondergehäuse (1) oder Kartusche, das aus einer Hülse (2) und einem Wasserdurchtrittsöffnungen ausweisenden Bodenteil (3) gebildet ist, und wenigstens einer, im Wesentlichen unbeweglich gehaltenen Ventilsitzscheibe und einer an der Ventilsitzscheibe angelagerten, mit Hilfe eines Betätigungsorgans (5) bewegbaren Steuerscheibe, wobei an den Wasserdurchtrittsöffnungen gummielastische Dichtungen (45) zur Abdichtung zwischen der Ventilsitzscheibe und einer Sanitärarmatur unlösbar angeordnet sind, **dadurch gekennzeichnet, dass** die Dichtungen (45) an einem Dichtungsträger (4) ausgebildet sind, der in eine Öffnung (30) des Bodenteils (3) eingesetzt ist, wobei in der Stecklage der Dichtungsträger (4) zum Bodenteil (3) axial begrenzt verschiebbar gehalten ist.

2. Wassermischventil nach Anspruch 1, **dadurch gekennzeichnet, dass** der axiale Verschiebungsbereich (31) des Dichtungsträgers (4) zum Bodenteil (3) wenigstens 0,18 mm beträgt.

3. Wassermischventil nach Anspruch 1 oder 2, **dadurch gekennzeichnet, dass** die Öffnung (30) im Bodenteil (3) im Querschnitt die Form eines gleichschenkligen Dreiecks aufweist, wobei die Ecken (300) mit Kreisbögen verrundet sind.

4. Wassermischventil nach wenigstens einem der vorhergehenden Ansprüche, **dadurch gekennzeichnet, dass** in der Wandung der Öffnung (30) und an der Umfangsseite des Dichtungsträgers (4) jeweils eine Schulter (301, 400) ausgebildet ist, derart, dass die Eintauchtiefe des Dichtungsträgers (4) in der Öffnung (30) von den Schultern (301, 400) begrenzt wird.

5. Wassermischventil nach Anspruch 4, **dadurch gekennzeichnet, dass** die Schultern (301, 400) von wenigstens zwei Axialschlitzen (302, 401) unterbrochen sind, wobei in den Axialschlitzen (302, 401) radial federnd vorstehende Rastnasen (303, 402) angeordnet und so dimensioniert sind, dass der Dichtungsträger (4) in die Öffnung (30) des Bodenteils (3) einsprengbar ist, derart, dass der Dichtungsträgers (4) unverlierbar im Bodenteil (3) gehalten ist und die erforderliche begrenzte axiale Verschiebbarkeit hat.

6. Wassermischventil nach wenigstens einem der Ansprüche 3 bis 5, **dadurch gekennzeichnet, dass** der Winkel (γ) des gleichschenkligen Dreiecks der Öffnung (30) 61° bis 65° beträgt.

7. Wassermischventil nach wenigstens einem der vorhergehenden Ansprüche, **dadurch gekennzeichnet, dass** im Dichtungsträger (4) drei im Querschnitt oval gestaltete Durchtrittsöffnungen (40) ausgebildet sind, wobei die Dichtungen (45) an den Wandungen der Durchtrittsöffnungen (40) angespritzt sind.

8. Wassermischventil nach Anspruch 7, **dadurch gekennzeichnet, dass** an der Innenseite der Dichtungen (45) Wasserführungen (450) angeformt sind.

9. Wassermischventil nach wenigstens einem der vorhergehenden Ansprüche, **dadurch gekennzeichnet, dass** die Höhe des gleichschenkligen Dreiecks der Öffnung (30) eine Symmetrieachse (32) für die Anordnung der Durchtrittsöffnungen (40) bildet.

10. Wassermischventil nach Anspruch 9, **dadurch gekennzeichnet, dass** zwei Durchtrittsöffnungen (40) neben der Symmetrieachse (32) angeordnet sind, während eine weitere Durchtrittsöffnungen (40) auf der Symmetrieachse (32) platziert ist.
